Europäisches Patentamt

European Patent Office

Office européen des brevets

(11) Publication number: **0 129 287**
**B1**

(18)
(12)
(45)
(21)
(22)

# EUROPEAN PATENT SPECIFICATION

(45) Date of publication of patent specification: **28.10.87**

(21) Application number: **84200833.6**

(22) Date of filing: **08.06.84**

(51) Int. Cl.⁴: **G 05 B 13/02,** G 05 D 1/00, H 02 J 3/46

(54) **Control system.**

(30) Priority: **10.06.83 NL 8302077**

(43) Date of publication of application:
**27.12.84 Bulletin 84/52**

(45) Publication of the grant of the patent:
**28.10.87 Bulletin 87/44**

(84) Designated Contracting States:
**AT BE CH DE FR GB IT LI LU NL SE**

(56) References cited:
**GB-A-1 135 508**
**US-A-3 566 241**
**US-A-3 727 572**
**US-A-3 838 656**
**US-A-3 880 348**
**US-A-4 074 648**

**TRANSACTIONS OF THE INSTITUTE OF
MEASUREMENT AND CONTROL, vol. 1, no. 3,
September 1979, pages 171-175, London, GB;
D.R. BROOME: "Integrated control of ship roll
and yaw motions"**

(73) Proprietor: **Van Rietschoten & Houwens
Elektrotechnische Maatschappij B.V.
Sluisjesdijk 155 Postbus 5054
NL-3008 AB Rotterdam (NL)**

(72) Inventor: **Van der Klugt, Petrus Gerardus Maria
Kapellaan 21
NL-2635 DA Den Hoorn (NL)**
Inventor: **Van Amerongen, Jacob
Anna van Hensbeeksingel 361
NL-2803 LW Gouda (NL)**

(74) Representative: **van der Beek, George Frans
et al
Nederlandsch Octrooibureau Johan de Wittlaan
15 P.O. Box 29720
NL-2502 LS 's-Gravenhage (NL)**

EP 0 129 287 B1

## Description

The invention relates to a control system comprising a controller and supplying a control signal to a process to be controlled, of which process at least one parameter is monitored and a signal representing said parameter is, together with a corresponding set point value, supplied to an input junction of the control system, the input junction supplying an error signal to the controller, the control system further comprising between its input junction and its output an amplifier with adjustable amplification factor.

A control system of this type is for instance described in GB 1,135,508. The gain of the variable gain amplifier in this system is controlled by a differential amplifier receiving both the error signal and a time derivative thereof at his inputs.

In such control systems problems will arise in case the section of the process to be controlled has a limited response velocity, inherently existent or deliberately provided, for the supplied control signals. Such a situation will for instance appear in valve control systems, in which a certain time period is required to move the valves from the one (extreme) position to the other (extreme) position. An other example are the rudder machines of a vessel in which also a time period is required to move the rudder and possibly the fins of a vessel from the momentaneous position into an other position indicated by the control signal. If the related actuators receive control signals on which the actuator should react with a higher speed than is physically possible, then there is a good chance that the control system will show overshoot or that in an other way the functioning of the control system will become significantly deteriorated.

A system for limiting the control signal supplied to an actuator which has a limited ability to follow changing error signals is described in US 3,556,241. In this system a loop around the controller is used including threshold devices to render the loop active when the controller output exceeds the threshold magnitude. When this occurs, the generated output signal is clamped to the threshold magnitude, resulting in distortion of the control signal.

An object of the invention is now to avoid the possibility that control systems of this type are guided into the area in which the restricted response speed of the section of the process to be controlled dominates the behaviour of the control system avoiding thereby any distortion of the actual control signal.

In agreement with this object a control system of the above-described type is according to the invention characterized in that the system comprises a processor for comparing the rate of change of the control signal supplied to the process with a predetermined maximum permissible rate of change value and in response to said comparison the processor either supplies an amplification factor control signal to the amplifier maintaining the amplification factor at a predetermined constant value when the rate of change of the control signal is below said predetermined maximum, or supplies an amplification factor control signal to the amplifier resulting in a temporary decrease of the amplification factor if the rate of change of the control signal exceeds said predetermined maximum value, in which latter case the amplification factor is maintained by the processor at a decreased value during a certain time period.

The result of the measure according to the invention is that the strength of the control signal is temporarily attenuated such that the control system does not generate signals in response to which the velocity limits of the section of the process to be controlled will be exceeded, so that the proper control behaviour is maintained.

It is preferred to apply the invention to a control system such that in case the amplification factor of the amplifier is decreased, the system remains functioning as close as possible to the border of the not limiting control area. In this relation a preferred embodiment of the invention is characterized in that the value of the amplification control signal is inversely proportional to the extent in which the rate of change of the control signal exceeds the predetermined maximum rate of change value.

A control system functioning in this way can be realized in that in the processor a signal is generated proportional to the absolute value of the rate of change of the control signal, which signal is supplied to a peak detector of which the output signal in a comparator is compared with a signal representing the predetermined maximum rate of change, which comparator enables the larger of the two signals to pass to a divider in which the value of the predetermined maximum rate of change value is divided by the value of the passed signal resulting in an output signal that is supplied as control signal to the amplifier with adjustable amplification factor.

It is remarked that US Patent 3,880,348 describes a variable structure adaptive controller which shows resemblance with an embodiment of the system according to the present application. More specifically this prior art structure comprises a divider supplying an output as control signal to the amplifier with adjustable amplification factor.

The problems indicated above will for instance arise in rudder automates for controlling the rudder and/or stabilizing the fins of a vessel. In such rudder automates one or more measuring signals generated by measuring sensors, which measuring signals are representative for the course of the vessel, are supplied to the controller together with an adjustable control signal representative for the nominal course. In its turn the controller supplies a control signal to the rudder machine which under the influence thereof moves the rudder such that the nominal course is maintained. On vessels comprising steering fins these fins can be separately or together with the rudder be positionally controlled using the same control system or using an identical control system such that also in that case the nominal course is maintained.

If in such control systems the controller supplies a signal to the rudder machine which in response thereto should have to move the rudder faster than is physically possible, then in fact in the rudder machine the rate of change of the control signal will be limited resulting in the above indicated problems.

The invention now provides a control system for use onto a vessel comprising a controller supplying a control signal to one or more actuator(s) for controlling the rudder and/or steering fins (rudder machine), at least a measuring sensor for supplying a signal representing the momentaneous course, which signal together with a set point signal for the nominal course is supplied to the controller through an input junction, which control system according to the invention is characterized in that between the input junction and the actuator an amplifier with adjustable amplification factor is inserted, that the rate of change of the actuator control signal supplied to the actuator is compared in a processor with a predetermined maximum rate of change value, as result of which the processor supplies a control signal to the amplifier maintaining the amplification factor equal to a predetermined constant value in case the rate of change of the actuator control signal is below said predetermined maximum value, or supplies a control signal to the amplifier decreasing therewith temporarily the amplification factor in case the rate of change of the actuator control signal exceeds said predetermined maximum value.

The instability problem is significantly pertinent in case the rudder and/or the steering fins are not only used to control the course but are also used to reduce the roll angle. Also systems are known in which the rudder and fins are used both for controlling the course as well as reducing the roll angle and furthermore there are systems in which only the rudder is used both for controlling the course as well as reducing the roll angle. Essentially in such systems is that relatively slow (low frequency) control signals are supplied to the rudder and/or fins to control the course of the vessel whereas relatively fast (high frequency) control signals are supplied to reduce the roll angle of the ship. The velocity of both the rudder as well as the fins is finite, dependent on the design of the rudder machines, the strength of the construction, etc. As is already indicated above problems will arise when control signals are supplied to the machines for controlling the rudder and/or fins, which control signals require a higher velocity of the rudder and/or fins than the maximum possible velocity. Amongst others these problems are the following:

— Unacceptable large course errors will appear.

— The roll angle will not, or not to the desired extent, be reduced.

— The resulting rudder- and/or fin angles will become unnecessarily large, which has an adverse influence on the velocity of the ship as well as on the life of the system.

— The system may become unstable.

These disadvantages may be reduced to a significant extent in a further embodiment of the last mentioned control system, which embodiment is according to the invention characterized in that the control system comprises further measuring sensors supplying one or more signals representing the roll movement of the vessel, which signals are supplied to a controller generating a control signal to the actuator(s) used for controlling the stabilisation fins of the vessel whereby within, before or after the controller an amplifier with adjustable amplification factor is inserted in the control loop, the rate of change of the actuator control signal is compared in a processor with a predetermined maximum rate of change value with the result that the processor delivers a control signal to the amplifier for temporarily decreasing the amplification factor in case the rate of change of the actuator control signal is exceeding said predetermined maximum value.

If on a vessel only or mainly the rudder is used for both course control as well as for stabilisation purposes then the control system can be embodied such that the control system comprises further measuring sensors generating one or more signals representing the roll movement of the vessel which signals are supplied to the controller, and that the controller outputs a combined output signal to the actuators comprising on the one hand relatively low frequency components for controlling the rudder as well as relatively high frequency components for reducing the roll angle.

Especially in situations in which the rudder of a ship is both used for course control as well as for roll angle reduction it is possible that the above indicated problems are not caused by the low frequency components in the output signal of the controller, which are influencing the course, but are mainly caused by the high frequency components. Therefore an adapted embodiment of the control system according to the invention is characterized in that only the relatively high frequency components of the output signal of the controller are supplied to the amplifier with variable amplification factor and that the output signal of said amplifier is combined with the relatively low frequency components into the actuator control signal.

As is already remarked the invention can be applied to control systems in which the section of the process to be controlled has a maximum response velocity, physically determined or deliberately provided. In the above mentioned example in which the invention is applied to a rudder machine of a ship the velocity restriction is not deliberately provided but is the result of physical restrictions.

An example of a deliberately provided limitation is found in the control of turbogenerator units in electrical power plants. Dependent on the total load each of the units in a network comprising mutually coupled units, is controlled such that, taking into account the maximum capacity of each of said units, all together the requested power is generated. For electricity producing units the maximum allowable load variation gradients are defined such that the power production for each unit can be adapted to the varying load only with a restricted variation rate. Large load variations therefore may lead to a strong overshoot in the produced power. That phenomenon will be the stronger as the number of units, combined into one frequency-power-control system is larger.

A solution for said problem is now provided by a control system for controlling one or more electricity production units, in which the deviation between the total power to be produced and the actually produced power is determined by measuring signals which measure the deviation between a predetermined desired exchange of power through the interconnecting feeder lines and the actual exchange, and measuring signals measuring the deviation between the actual frequency of the mains voltage and the desired frequency, which last mentioned deviation is converted into a power deviation using a proportionality factor, resulting in input signals to the controller which generates control signals at its output(s) to one or more electricity production units, which control system is according to the invention characterized in that in the controller an amplifier with adjustable amplification factor is inserted, that furthermore the rate of change of each control signal supplied to one of the electricity production units, is compared in a comparator with a predetermined maximum rate of change value, and in response to said comparison the processor supplies a control signal to the amplifier with the result that the amplification factor remains equal to a predetermined constant value in case the rate of change of the control signal is underneath a predetermined maximum, or supplies a control signal to the amplifier resulting in a temporarily decrease of the amplification factor in case the rate of change of the control signal exceeds said predetermined maximum value.

In case a number of control systems of the above discussed type are combined into one control system to influence simultaneously a number of activators within one and the same process, then the controllers of the various control system can be mutually coupled. In the example of a ship with a first control system for the rudder machine and a second control system for the fin machine(s) the controllers of both control systems can be mutually coupled.

An embodiment which can be adjusted to the circumstances in a very simple and easy way can be realized when the functions of generating a signal proportional to the absolute value of the rate of change of the control signal, determining the extreme values in this signal, comparing said extreme values with a predetermined maximum rate of change value, and dividing the predetermined maximum rate of change value by the value of the passed signal are carried out in a microprocessor or microcomputor comprising an input for receiving the control signal, means for inputting a maximum rate of change value and an output for delivering the adapted control signal.

The invention is not only incorporated in a control system or control apparatus of the above described type, but is also incorporated into a vessel comprising a control system or control apparatus of the above mentioned type, an electricity production unit connected into a control circuit in which the invention is applied, as well as in other means in which the section of a process to be controlled has a physically existing or deliberately provided limitation of the actuation velocity in relation to which the invention can be applied.

The invention will now be discussed in more detail with reference to the attached drawings.

Fig. 1 illustrates in general a control system in which the invention is applied.

Fig. 2 illustrates the application of the invention into a vessel comprising a rudder control machine as well as a fin control machine with corresponding controllers.

Fig. 3 illustrates in more detail the unit which is added in agreement with the invention.

Fig. 4 illustrates an other embodiment of the unit which is added in agreement with the invention.

Fig. 5 illustrates possible signal curves appearing at two locations within the diagram of the figures 3 and 4.

Fig. 6 illustrates graphically the influence on the course of a vessel when the invention is applied to a course automat.

Fig. 7 illustrates the influence of the invention when also signals corresponding to the rolling movement of the ship are supplied to the course automat.

Fig. 8 illustrates the application of the invention in an electrical power generating plant.

Fig. 9 illustrates graphically the influence of the invention in the application of Fig. 8.

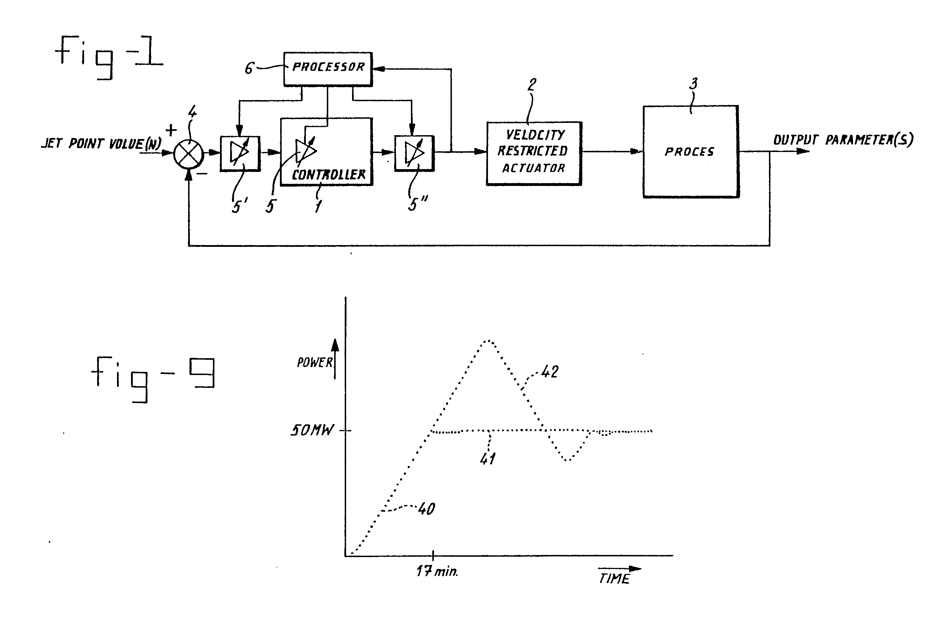

Fig. 1 illustrates in general a control system comprising a controller 1, an actuator 2 with limited velocity and a process 3 to be influenced by said actuator. One or more output parameters of the process 3 are derived by thereby destined means and combined with set point values supplied in a suitable way to the junction 4. The combined signal is supplied to the controller 1.

Because the actuation velocity of the actuator 2 is limited the above indicated problems will arise when the controller 1 supplies a signal to which said actuator in fact should react with a velocity exceeding its maximum velocity. According to the invention now before, within or after the controller a unit 5, 5' or 5'' is inserted and a control signal is supplied to said unit which control signal will be derived in a process 6 from the control signals supplied to the actuator. The function of the unit 5 (5', 5'') is now to attenuate the output signal of the controller 1 when said output signal would require an excessive velocity of the actuator 2. By said attenuation within the unit 5 (5', 5'') the control signals supplied to the actuator 2 will be of such nature, that the maximum velocity of the actuator will not be exceeded.

Details of the unit 5 (5', 5'') of Fig. 1 will be discussed hereinafter.

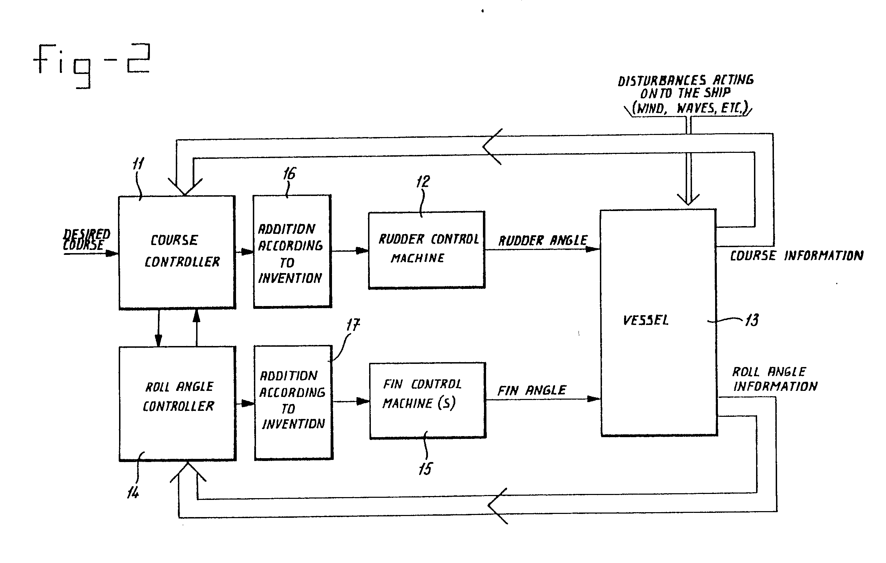

Fig. 2 illustrates in a very general sense the application of the invention onto a ship comprising a rudder control machine and/or a fin control machine. In Fig. 2 in principle two control loops are indicated, the first loop comprising the course controller 11 supplying an actuator control signal to the rudder control machine 12 influencing thereby the rudder angle of the vessel 13. Course information of the ship is derived by means of suitable sensors and fed back to the course controller 11, whereas through a separate input a signal corresponding to the desired course is inputted into the course controller 11. Between the course controller 11 and the rudder control machine 12 the additional unit 16 according to the invention is inserted.

The second control loop comprises the roll angle controller 14 supplying an actuator control signal to the fin control machine(s) 15 for controlling the fins installed onto the vessel 13 such that the roll angle of the vessel will be minimized. Information about the roll movement of the vessel 13 is fed back to the roll angle controller 14. Between the roll angle controller 14 and the fin control machine(s) 15 the additional unit 17 according to the invention is inserted.

As is indicated in the figure all kinds of disturbances will have their influence on the ship, for instance caused by wind, waves etc., which disturbances will lead to both course deviations as well as to roll movements of the ship. The upper control loop 11, 12, 13, 16 is in principle destined to control the course and the lower control loop 13, 14, 17, 15 is in principle destined for reducing the roll angle, however, it will be clear that both control loops will mutually influence each other and therefore the course controller 11 and the roll angle controller 14 can be mutually coupled as is indicated in the figure by a two way connection.

In each of the control loops the related additional unit 16 respectively 17 will take care that the control signal, supplied to the related control machine will induce a response of the related control machine just within the area without velocity limitation. If necessary the signal supplied to the course controller respectively the roll angle controller will be attenuated in said additional unit 16, 17 such that the velocity of the actuator will not be limited and therefore the actuator will remain functioning in the linear area without limitations appearing into the loop which could result into undesired behaviour or instabilities. Although both in Fig. 1 as well as in Fig. 2 a separate additional unit is illustrated into each control loop it will be clear, that also in the course controller itself an amplification factor can be varied in which case a combination is obtained of the course controller 11 with the additional unit 16 respectively of the roll angle controller 14 with the additional unit 17.

When the invention is applied to a vessel of which the rudder is used both for maintaining a desired course as well as for reducing the roll angle, then the rudder control machine will receive signals from both the course controller 11 as well as from the roll angle controller 14. In that case the units 17 and 15 will be eliminated in Fig. 2 and the controllers 11 and 14 can be combined into one single controller.

Although not indicated in Fig. 2 it is preferred to supply information about the travelling velocity of the vessel both to the course controller 11 and to the roll angle controller 14.

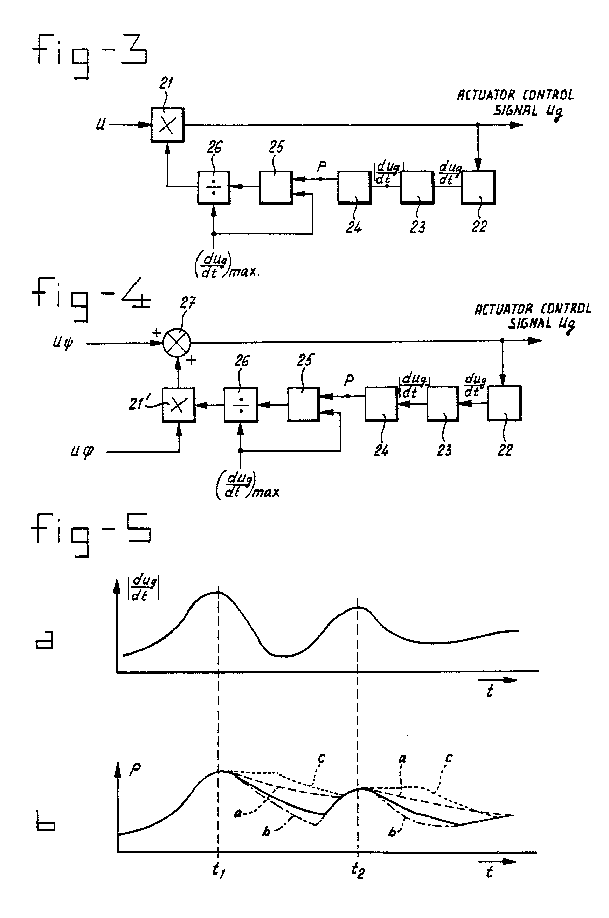

Fig. 3 illustrates a block diagram of an additional unit according to the invention. The control signal u at the output of the controller is supplied to a multiplier 21 at the output of which the actuator control signal ug is available. This actuator control signal is furthermore delivered to a unit 22 in which the velocity of the actuator control signal $du_g/dt$ is determined. Said unit 22 may be embodied for instance as a simple differentiator or may be embodied as a more extensive estimating filter. The output signal of the unit 22 is delivered to the unit 23 in which the absolute value of the velocity signal $|du_g/dt|$ is determined, which absolute value is supplied to the peak detector 24. The output signal of the peak detector 24 is delivered to one input of the comparator 25, the other input of which receives a predetermined maximum velocity value $(du_g/dt)_{max}$. The comparator 25 determines the larger of the signals at its two inputs and passes said larger input signal to the divider 26 in which the predetermined maximum velocity value $(du_g/dt)_{max}$ is divided by the signal received from the comparator 25. The output signal of the divider 26 will be supplied to the multiplier 21.

As long as the output signal of the peak detector 25 does not exceed the signal $(du_g/dt)_{max}$, the comparator will pass the larger of the two signals, in this case the signal $(du_g/dt)_{max}$ to the divider 26 in which said signal is divided by itself. The resulting unity signal will be supplied to the multiplier 21 and the result thereof is that in fact the input signal u is without any attenuation (with the exception of a possible constant amplification factor) is transferred as actuator control signal $u_g$ to the output of the additional unit according to the invention.

However, if the output signal of the peak detector 24 exceeds the signal $(du_g/dt)_{max}$, then this larger output signal of the peak detector 24 will be transferred by the comparator 25 and will reach the divider 26 in which the value $(du_g/dt)_{max}$ will be divided by said larger output signal resulting in a signal to the multiplier which is smaller than the unit signal. This smaller signal at the output of the divider 26 will result into a decrease of the actuator control signal $u_g$ at the output of the multiplier 21 in such a way that the actuator will be able to just follow said smaller actuator control signal $u_g$ without running into any limitation.

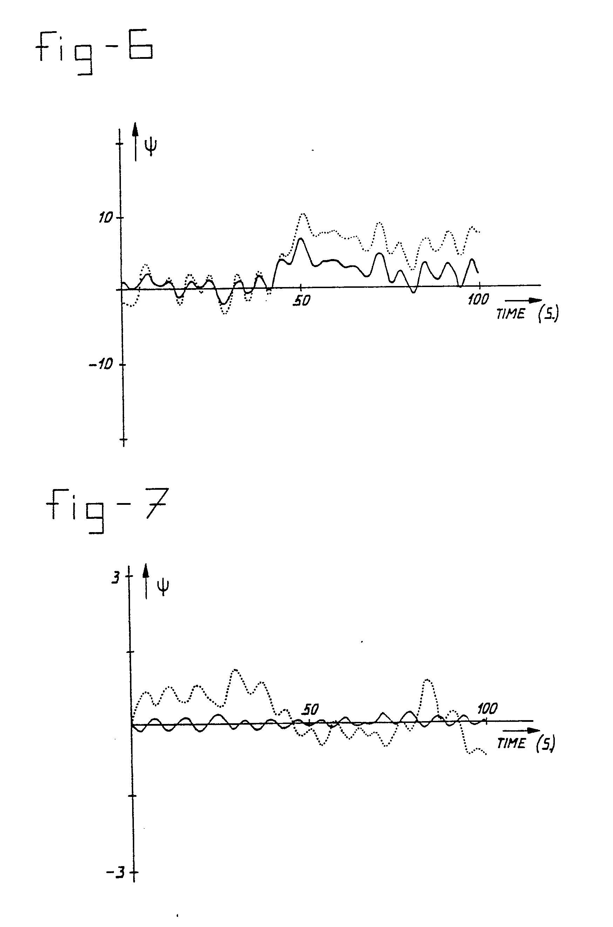

To avoid that the control loop will remain in this new condition with a smaller actuator control signal, the peak detector 24 has for instance a falling off nature, which implies that the peak detector will not continuously hold the highest measured signal, but will start decreasing to zero after disappearance of the peak in the signal in the way as is indicated in Fig. 5, until the peak detector will be able to follow its input signal again.

Fig. 5a illustrates a possible input signal $|du_g/dt|$ of the peak detector 24 and Fig. 5b illustrates possible output signals p of the peak detector 24. As is indicated in Fig. 5 a peak in the velocity signal $|du_g/dt|$ is reached at time t1. From this moment on the output signal of the peak detector will either directly or after a certain delay period start to decrease to zero until the input signal of the peak detector exceeds the output signal thereof, at which moment the peak detector will follow the input signal again. The dash line a indicates a slowly decreasing curve whereas the dash and dot line b indicates a faster decreasing curve. The dot line c illustrates the situation in which the maximum signal in the peak detector is held during a predetermined period, whereafter the output signal of the peak detector will slowly decrease until the input signal exceeds the decreasing output signal. Also after the succeeding peak in the input signal $|du_g/dt|$ appearing at the time t2 the peak detector may react according to curve a, b or c or possibly another different not illustrated variation thereof. The fall off characteristic of the peak detector has to be selected dependent onto the desired properties of the control system.

If the peak in the velocity signal $|du_g/dt|$ is a one time appearing phenomenon then the unit according to the invention will take care that the amplification factor will slowly rise to its original value as result of the varying output signal of the peak detector 24. However, if there are more peaks in the velocity signal then the unit according to the invention will interfere continuously. The nett effect thereof is that a less powerful adjusted controller is obtained such that the system as a whole has adapting properties.

Fig. 4 illustrates a somewhat altered embodiment of the added unit according to the invention in schematical form. The circuits in said unit which correspond to the circuits in Fig. 3 and have the same function are indicated by the same reference numbers. As appears from Fig. 4 the only difference in said unit concerns the circuits 21' and 27. In said unit the lower frequency components of the control signal supplied by the controller, indicated by $u\psi$, are supplied to the junction 27 in which said components are combined with the output signal of the multiplier 21'. The higher frequency components $u\psi$ are supplied to one input of the multiplier 21', whereas the output signal of the divider 26 is supplied to the other input of the multiplier. The functioning of the unit illustrated in Fig. 4 is mainly the same as the functioning of the unit in Fig. 3, but it will be clear from Fig. 4 that the attenuation realized by said unit does not apply to the whole control signal as supplied by the controller but only to the higher frequency components $u\phi$ which if necessary are attenuated in the multiplier 21' and after attenuation combined with the lower frequency components $u\psi$ in the junction 27. The signals illustrated in Fig. 5 apply also to this embodiment.

Fig. 6 illustrates the effect of the invention in a controller which is only used for controlling the course. In said figure the course deviation $\psi$ is illustrated as function of the time. The dot line represents the actuator control signal without application of the invention and the full line illustrates the actuator signal corrected by application of the invention.

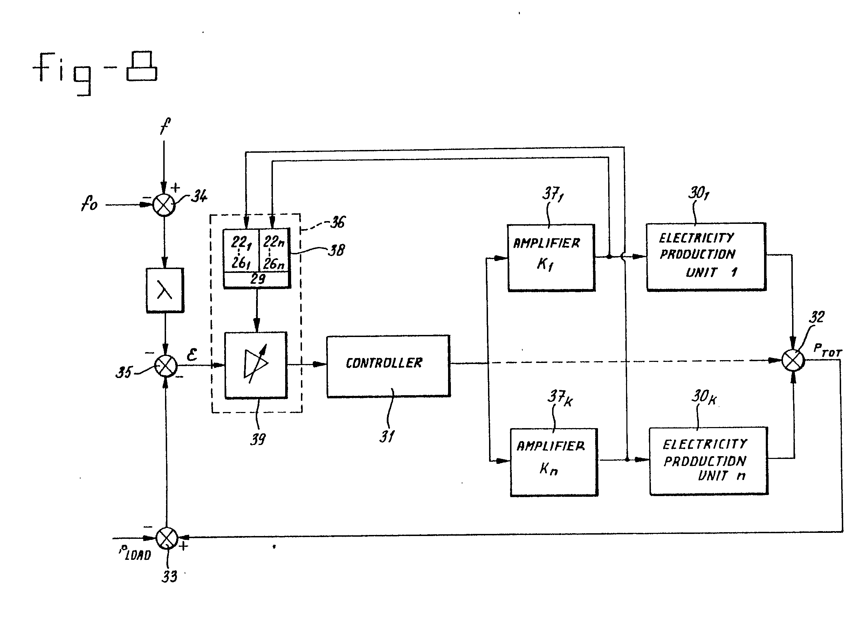

Fig. 7 shows the effect of the invention onto a controller which both controls the course as well as tries to reduce the roll angle. In this figure the course deviation $\psi$ is illustrated as function of the time. The dot line represents the actuator control signal without application of the invention and the full line illustrates the actuator signal corrected by application of the invention.

Fig. 8 illustrates a completely different embodiment of the invention. In this figure a number of electricity production units $30_1 \ldots 30_n$ are shown which are controlled by a controller 31. Said controller 31 receives a signal which is a measure for the deviation between the desired power production and the actually produced power, derived from the junction 35, which junction in the first place receives a signal representing the deviation between the desired power exchange through the interconnecting feeder lines and the actual exchange value from the junction 33 and receives in the second place a desired power alteration signal derived by means of a proportionality contant $\gamma$ out of the deviation between the actual mains frequency and the desired mains frequency derived from the junction 34. In junction 34 the momentaneous mains frequency f is compared with the nominal mains frequency $f_0$ and the output signals of the junctions 33 and 34 are combined into the additional junction 35 to the input signal $\epsilon$ for the controller 31. Said controller 31 provides at its output a control signal u which is supplied to all electricity production units through corresponding amplifiers $37_1 \ldots 37_n$ each having an own amplification factor $K_1 \ldots K_n$. Said amplifiers $37_1 \ldots 37_n$ allow the use of production units with different maximum capacity into the control system such that each of the production units, taking into account the respective maximum capacity, will be loaded to the desired extent. As is already remarked above that deliberate velocity limitations are set to the alteration of power supplied by each of the electricity production units and the additional unit 36 now in the already described way takes care that the provided limits are not exceeded. Internally the processor 38 in the unit 36 may be embodied as is indicated in the Figures 3 and 4 taking into account that in this example the units 22—26 inclusive have to be implemented separately for each production unit and the minimum value delivered by said units 26 is supplied to the unit 21. In the figure the series of units $22_1$ ... $26_1$ to $22_n$ ... $26_n$ are connected to a minimum value determining unit 29 delivering the control signal to the amplifier stage 39.

Fig. 9 illustrates graphically the influence of the application of the invention into a control system comprising a limiting element in the process to be controlled, especially the frequency-power-control of an electricity production plant in which the response velocity of a production unit is limited to 3MW/min. If the controller outputs a signal at the limit of the allowable velocity area then the system will react as is indicated by the lines 40 and 41 in Fig. 9, in other words the electrical power will be altered with the maximum allowable velocity (line 40) and will thereafter remain stable at the desired value (line 41).

If the control signal however requires an alteration of the power with too high alteration velocity then the system would show overshoot as is indicated by line 42. When in such a situation the invention is applied then the additional unit will take care that first of all line 40 will be followed. As soon as the desired power level is reached the control system will follow line 41 thereafter.

It is possible to build a complete analogue embodiment of a system according to the invention. However, use of a microcomputer or microprocessor will lead to a significant reduction in the number of necessary components. The process steps which have to be carried out in the various units in the Figures 3 and 4 can in a very simple way be carried out sequentially into a microcomputer or microprocessor and the complete unit realized in this way can very easily be adapted to the specific application by inputting another maximum rate of change value using suitable input means. Also the decay characteristic of the peak detector can be adapted very flexible to the respective application in a microprocessor embodiment.

The microprocessor or microcomputer may comprise a suitable interphase for receiving the signal from the controller and for supplying the possibly corrected signal to the section of the process to be controlled. Especially preferred is a microcomputer or microprocessor in case the unit according to the invention is added to an existing control system in which the signal processing is done digitally.

**Claims**

1. Control system comprising a controller (1; 31) and supplying a control signal to a process (3; $30_1$, $30_k$) to be controlled, of which process (3; $30_1$, $30_k$) at least one parameter is monitored and a signal representing said parameter is, together with a corresponding set point value, supplied to an input junction (4; 33) of the control system, the input junction supplying an error signal to the controller (1; 31), the control system further comprising between its input junction and its output an amplifier (5, 5' or 5'') with adjustable amplification factor, characterized in that the system comprises a processor (6; 36) for comparing the rate of change of the control signal supplied to the process (3; $30_1$, $30_k$) with a predetermined maximum permissible rate of change value and in response to said comparison the processor (6; 36) either supplies an amplification factor control signal to the amplifier (5, 5' or 5'') maintaining the amplification factor at a predetermined constant value when the rate of change of the control signal is below said predetermined maximum, or supplies an amplification factor control signal to the amplifier (5, 5' or 5'') resulting in a temporary decrease of the amplification factor if the rate of change of the control signal exceeds said predetermined maximum value, in which latter case the amplification factor is maintained by the processor (6; 36) at a decreased value during a certain time period.

2. Control system according to claim 1, characterized in that in the processor (6; 36) a signal is generated proportional to the absolute value of the rate of change of the control signal, which signal is supplied to a peak detector (24) of which the output signal is compared in a comparator (25) with a signal representing the predetermined maximum rate of change value, which comparator enables the larger of the two signals to pass a divider (26) in which the value of the predetermined maximum rate of change value is divided by the value of the passed signal resulting in an output signal that is supplied as control signal to the amplifier with adjustable amplification factor, said peak detector (24) having a hold characteristic maintaining its output signal at the last received peak signal value for a certain time period and then reducing its output signal with a predetermined rate.

3. Control system according to claim 1 or 2, characterized in that the amplifier with adjustable amplification factor (5''; $37_1$, $37_k$) is connected between the controller (1; 31) and the output of the control system and only the relatively high frequency components of the output signal of the controller (1; 31) are supplied to the amplifier (5'') with variable amplification factor and that the output signal of said amplifier (5'') is combined with the relatively low frequency components to form the actuator control signal.

4. Control system according to any one of the preceding claims, characterized in that the functions of generating a signal proportional to the absolute value of the rate of change of the control signal, determining the extremes in said signal, comparing said extremes with the predetermined maximum rate of change value and dividing the maximum rate of change value by the passed signal are carried out in a microprocessor or microcomputer comprising an input for receiving the control signal, means for inputting a maximum rate of change value and an output for delivering the adapted control signal.

5. Control system according to any one of the preceding claims, applied to an automatic steering system on a vessel (13), wherein the controller (11, 14) supplies a control signal to one or more actuator(s) (12, 15) for controlling the rudder and/or steering fins, the system further comprising a measuring sensor for supplying a signal representing the momentaneous course, which signal together with a set point signal for the nominal course is supplied to the input junction.

6. Control system according to claim 5, characterized in that the control system comprises at least one further measuring sensor supplying a signal representing the roll movement of the vessel which signal is supplied to a further controller (14) generating a control signal to the actuator(s) (15) used for controlling the stabilisation fins of the vessel, the system further comprising within, before or after the further controller (14) an amplifier (17) with adjustable amplification factor, the rate of change of the actuator control signal being compared in a processor with a predetermined maximum permissible rate of change value with the result that the processor delivers an amplification factor control signal to the amplifier for temporarily decreasing the amplification factor if the rate of change of the actuator control signal exceeds said predetermined maximum value, in which case the amplification factor is maintained by the processor at a decreased value during a certain time period.

7. Control system according to claim 5 or 6, characterized in that the control system comprises further measuring sensor generating a signal representing the roll movement of the vessel, which signal is supplied to the controller, and that the controller provides a combined output signal to the actuator(s) comprising on the one hand relatively low frequency components for controlling the rudder, as well as relatively high frequency components for reducing the roll angle.

8. Vessel comprising a control system according to any one of the preceding claim 5—7.

9. Control system according to any one of claims 1—4 for controlling one or more electricity production units ($30_1$, $30_k$) of which the deviation between the total power to be produced and the actually produced power is determined by measuring signals which measure the deviation between the predetermined desired exchange of power through feeder lines and the actual exchange, and measuring signals measuring the deviation between the actual frequency of the main voltage and the desired frequency, which last mentioned deviation is converted into a power deviation, using a proportionally constant resulting in input signals for the controller (31) which at its output(s) deliver(s) control signals to one or more electricity production units ($30_1$, $30_k$) characterized in that the controller (31) comprises said amplifier with adjustable amplification factor, the rate of change of the control signal supplied to each of said electricity production units is compared in the processor with said predetermined maximum permissible rate of change value, and in response to said comparison the processor supplies a control signal to the amplifier with the result that the amplification factor remains equal to a predetermined constant value when the rate of change of all control signals is below said predetermined maximum, or supplies a control signal to the amplifier resulting in a temporary decrease of the amplification factor if the rate of change of any one of the control signals exceeds said predetermined maximum value.

10. Electricity production unit comprising a control system according to claim 9.

## Patentansprüche

1. Regelsystem mit einem Regler (1; 31) zum Bereitstellen eines Steuersignals für einen zu steuernden Prozeß (3; $30_1$, $30_k$), von dem wenigstens ein Parameter erfaßt und zu einem diesen Parameter darstellenden Signal verarbeitet und zusammen mit einem entsprechenden Sollwert einer Eingangsverzweigung (4; 33) zugeführt wird, die ihrerseits dem Regler (1; 31) ein Korrektursignal zuführt, und mit einem zwischen der Eingangsverzweigung des Regelsystems und dessen Ausgang angeordneten Verstärker (5, 5' oder 5'') mit einstellbarem Verstärkungsfaktor, dadurch gekennzeichnet, daß das System einen Prozessor (6; 36) zum Vergleichen des Maßes der Änderung des dem Prozeß (3; $30_1$, $30_k$) zugeführten Steuersignals mit einem vorherbestimmten maximal zulässigen Maß des Änderungswertes aufweist und in Reaktion auf diesen Vergleich der Prozessor (6; 36) dem Verstärker (5, 5' oder 5'') entweder ein Verstärkungsfaktor — Steuersignal zuführt, welches den Verstärkungsfaktor auf einem vorherbestimmten konstanten Wert hält, wenn das Maß der Änderung des Steuersignals unterhalb des vorherbestimmten Maximums liegt, oder eine zeitweilige Verringerung des Verstärkungsfaktors bewirkt, wenn das Maß der Änderung des Steuersignals den vorherbestimmten Maximalwert übersteigt, in welche letzterem Fall der Verstärkungsfaktor durch den Prozessor (6; 36) während einer gewissen Zeitdauer auf einem verminderten Wert gehalten wird.

2. Regelsystem nach Anspruch 1, dadurch gekennzeichnet, daß im Prozessor (6; 36) ein dem absoluten Wert des Maßes der Änderung des Steuersignals proportionales Signal erzeugt wird, welches einem Spitzendetektor (24) zugeführt wird, dessen Ausgangssignal in einem Vergleicher (25) mit einem den vorherbestimmten Maximalbetrag des Änderungswertes darstellenden Signal verglichen wird, wobei der Vergleicher das größere der beiden Signale zu einem Teiler (26) passieren läßt, in welchem der Wert des vorherbestimmten Maximalbetrages des Änderungswertes durch den Wert des passierten Signals geteilt wird, resultierend in einem Ausgangssignal, welches dem Verstärker mit einstellbarem Verstärkungsfaktor als Steuersignal zugeführt wird, und daß der Spitzendetektor (24) eine Haltecharakteristik aufweist, die sein Ausgangssignal für eine gewisse Zeitdauer auf dem Wert des letzten empfangenen Spitzensignals hält und dann sein Ausgangssignal in einem vorherbestimmten Maß verringert.

3. Regelsystem nach Anspruch 1 oder 2, dadurch gekennzeichnet, daß der Verstärker mit einstellbarem Verstärkungsfaktor (5''; $37_1$, $37_k$) zwischen dem Regler (1; 31) und dem Ausgang des Regelsystems angeordnet ist, daß dem Verstärker (5'') mit verändertem Verstärkungsfaktor nur die relativ hochfrequenten Komponenten des Ausgangssignals des Reglers (1; 31) zugeführt werden und daß das Ausgangssignal des Verstärkers (5'') zur Bildung des Stellgliedsteuersignals mit den relativ niederfrequenten Komponenten kombiniert wird.

4. Regelsystem nach einem der vorhergehenden Ansprüche, dadurch gekennzeichnet, daß die Schritte der Erzeugung eines Signals proportional zu dem absoluten Wert des Maßes der Änderung des Steuersignals, der Bestimmung der Extreme dieses Signals, des Vergleichen dieser Extreme mit dem vorherbestimmten Maximumbetrag des Änderungswertes und der Teilung des Maximumbetrages des Änderungswertes durch das hindurchgegangene Signal in einem Mikroprozessor oder Mikrocomputer mit einem Eingang für das Empfangen des Steuersignals, einer Einrichtung für die Eingabe eines Maximumbetrages des Änderungswertes und einem Ausgang für die Abgabe des angepaßten Signals erfolgen.

5. Verwendung eines Regelsystems nach einem der vorhergehenden Ansprüche bei einem automatischen Steuersystem auf einem Schiff (13), wobei der Regler (11, 14) einem oder mehreren Stellgliedern (12, 15) für die Steuerung des Ruders und/oder der Leitflossen ein Steuersignal liefert und das System ferner einen Meßfühler für die Bereitstellung eines den augenblicklichen Kurs wiedergebenden Signals aufweist, das zusammen mit einem Sollwertsignal für den vorgesehenen Kurs der Eingangsverzweigung zugeführt wird.

6. Regelsystem nach Anspruch 5, dadurch gekennzeichnet, daß es wenigstens einen weiteren Meßfühler aufweist, der ein die Rollbewegung des Schiffes wiedergebendes Signal liefert, das einem weiteren Regler (14) zugeführt wird, welcher ein Steuersignal an das bzw. die Stellglieder (15) für die Steuerung der Leitflossen des Schiffes abgibt, und daß es ferner in, vor oder hinter dem weiteren Regler (14) einen Verstärker (17) mit einstellbarem Verstärkungsfaktor aufweist und das Maß der Änderung des Stellgliedsteuersignals in einem Prozessor mit einem vorherbestimmten maximal zulässigen Maß des Änderungswertes verglichen wird mit dem Ergebnis, daß der Prozessor dem Verstärker ein Verstärkungsfaktorsteuersignal für die zeitweilige Verringerung des Verstärkungsfaktors zuführt, wenn das Maß der Änderung des Stellgliedsteuersignals den vorherbestimmten Maximumwert überschreitet, in welchem Falle der Verstärkungsfaktor durch den Prozessor während einer gewissen Zeitdauer auf einem verringerten Wert gehalten wird.

7. Regelsystem nach Anspruch 5 oder 6, dadurch gekennzeichnet, daß es einen weiteren Meßfühler aufweist, der ein die Rollbewegung des Schiffes wiedergebendes dem Regler zugeführtes Signal erzeugt, und daß der Regler dem bzw. den Stellgliedern ein kombiniertes Ausgangssignal liefert, das sowohl verhältnismäßig niedrigfrequente Komponenten für die Steuerung des Ruders, wie auch verhältnismäßig hochfrequente Komponenten für die Verminderung des Rollwinkels enthält.

8. Schiff mit einem Regelsystem nach einem der Ansprüche 5 bis 7.

9. Regelsystem nach einem der Ansprüche 1 bis 4 für die Regelung einer oder mehreren Elektrizitätserzeugungseinheiten ($30_1$, $30_k$), von welchen die Abweichung zwischen der zu erzeugenden Gesamtenergie und der tatsächlich erzeugten Energie durch Meßsignale bestimmt wird, welche die Abweichung zwischem dem vorherbestimmten gewünschten Austausch von Energie durch Zubringerleitungen und dem tatsächlichen Austausch messen, und durch Meßsignale, die die Abweichung zwischen der tatsächlichen Frequenz der Hauptspannung und der gewünschten Frequenz messen, welche zuletzt erwähnte Abweichung in eine Energieabweichung umgewandelt wird, verwendend eine Proportionalitätskonstante resultierend in Eingabesignalen für den Regler (31), der an seinem bzw. seinen Ausgängen zu einer oder mehreren Elektrizitätserzeugungseinheiten ($30_1$, $30_k$) Steuersignale liefert, dadurch gekennzeichnet, daß der Regler (31) den Verstärker mit einstellbarem Verstärkungsfaktor aufweist, daß das Maß der Änderung des jeder der Elektrizitätserzeugungseinheiten zugeführten Steuersignals im Prozessor mit dem vorherbestimmten maximal zulässigen Maß des Änderungswertes verglichen wird und in Abhängigkeit von diesem Vergleich der Prozessor dem Verstärker ein Steuersignal liefert mit dem Ergebnis, daß der Verstärkungsfaktor mit einem vorherbestimmten konstanten Wert gleich bleibt, wenn das Maß der Änderung aller Steuersignale unter dem vorherbestimmten Maximum ist, oder dem Verstärker ein Steuersignal zuführt, resultierend in einer vorübergehenden Verringerung des Verstärkungsfaktors, wenn das Maß der Änderung irgendeines der Steuersignale den vorherbestimmten Maximumwert übersteigt.

10. Elektrizitätserzeugungseinheit mit einem Regelsystem nach Anspruch 9.

**Revendications**

1. Système de commande comprenant un régulateur (1; 31) et fournissant un signal de commande à un processus (3; $30_1$, $30_k$) à commander, processus (3; $30_1$, $30_k$) dont au moins un paramètre est contrôlé et dont un signal représentant ledit paramètre est fourni, conjointement avec une valeur de consigne correspondante, à une

9

jonction d'entrée (4; 33) du système de commande, la jonction d'entrée fournissant un signal d'erreur au régulateur (1; 31), le système de commande comprenant en outre entre sa jonction d'entrée et sa sortie un amplificateur (5, 5' ou 5'') à facteur d'amplification réglable, caractérisé en ce que le système comporte un processeur (6; 36) pour comparer la vitesse de variation du signal de commande fourni au processus (3; $30_1$, $30_k$) avec une valeur permissible maximale prédéterminée de la vitesse de variation et, en réponse à ladite comparaison, le processeur (6; 36) soit fournit un signal de commande du facteur d'amplification à l'amplificateur (5, 5' ou 5'') en maintenant le facteur d'amplification à une valeur constante prédéterminée quand la vitesse de variation du signal de commande est inférieure à ladite valeur maximale prédéterminée, soit fournit un signal de commande du facteur d'amplification à l'amplificateur (5, 5' ou 5'') en provoquant une baisse temporaire du facteur d'amplification si la vitesse de variation du signal de commande dépasse ladite valeur maximale prédéterminée, et dans ce dernier cas le facteur d'amplification est maintenu per le processeur (6; 36) à une valeur réduite pendant un certain temps.

2. Système de commande selon la revendication 1, caractérisé en ce que dans le processeur (6; 36) est produit un signal proportionnel à la valeur absolue de la vitesse de variation du signal de commande, lequel signal est fourni à un détecteur (24) de maximum dont le signal de sortie est comparé dans un comparateur (25) avec un signal représentant la valeur maximale prédéterminée de la vitesse de variation, lequel comparateur permet au plus grand des deux signaux de passer dans un diviseur (26) dans lequel la valeur maximale prédéterminée de la vitesse de variation est divisée par la valeur du signal passé en donnant un signal de sortie fourni en tant que signal de commande à l'amplificateur avec un facteur d'amplification réglable, ledit détecteur (24) de maximum ayant une caractéristique de maintien qui maintient son signal de sortie pendant un certain temps à la dernière valeur du signal de maximum reçue, puis qui réduit son signal de sortie à une vitesse prédéterminée.

3. Système de commande selon la revendication 1 ou 2, caractérisé en ce que l'amplificateur à facteur d'amplification réglable (5''; $37_1$, $37_k$) est monté entre le régulateur (1; 31) et la sortie du système de commande et seules les composantes de fréquence relativement élevées du signal de sortie du régulateur (1; 31) sont fournies à l'amplificateur (5'') à facteur d'amplification variable et en ce que le signal de sortie dudit amplificateur (5'') est combiné avec les composantes de fréquence relativement basses pour former le signal de commande de l'actionneur.

4. Système de commande selon l'une quelconque des revendications précédentes, caractérisé en ce que les fonctions consistant à produire un signal proportionnel à la valeur absolue de la vitesse de variation du signal de commande, à déterminer les extrêmes dans ledit signal, à comparer lesdits extrêmes avec la valeur maximale prédéterminée de la vitesse de variation et à diviser la valeur maximale de la vitesse de variation par le signal passé sont réalisées dans un microprocesseur ou un microordinateur comprenant une entrée pour recevoir le signal de commande, un moyen pour introduire une valeur maximale de vitesse de variation et une sortie pour produire le signal de commande adapté.

5. Système de commande selon l'une quelconque des revendications précédentes, appliqué à un système de pilotage automatique sur un navire (13), dans lequel le régulateur (11, 14) fournit un signal de commande à un ou plusieurs actionneurs (12, 15) pour commander le gouvernail et/ou les ailerons de direction, le système comportant en outre un capteur mesureur pour fournir un signal représentant le cap instantané, lequel signal, avec un signal de point de consigne pour le cap nominal, est fourni à la jonction d'entrée.

6. Système de commande selon la revendication 5, caractérisé en ce que le système de commande comporte au moins un autre capteur mesureur fournissant un signal représentant le mouvement de roulis du navire, lequel signal est fourni à un autre régulateur (14) produisant un signal de commande pour l'actionneur (les actionneurs) (15) servant à commander les ailerons de stabilisation du navire, le système comportant en outre intérieurement, avant ou après l'autre régulateur (14), un amplificateur (17) à facteur d'amplification réglable, la vitesse de variation du signal de commande d'actionneur étant comparée dans un processeur avec une valeur permissible maximale prédéterminée de la vitesse de variation, ce qui a pour résultat que le processeur fournit à l'amplificateur un signal de commande de facteur d'amplification pour réduire temporairement le facteur d'amplification si la vitesse de variation du signal de commande d'actionneur dépasse ladite valeur maximale prédéterminée, auquel cas le facteur d'amplification est maintenu par le processeur à une valeur réduite pendant un certain temps.

7. Système de commande selon la revendication 5 ou 6, caractérisé en ce que le système de commande comporte un autre capteur mesureur produisant un signal représentant le mouvement de roulis du navire, lequel signal est fourni au régulateur, et en ce que le régulateur produit à l'actionneur (aux actionneurs) un signal de sortie combiné comportant d'une part des composantes de fréquence relativement basse pour commander le gouvernail, d'autre part des composantes de fréquence relativement haute pour réduire l'angle de roulis.

8. Navire comportant un système de commande selon l'une quelconque des revendications 5 à 7 précédentes.

9. Système de commande selon l'une quelconque des revendications 1 à 4 pour commander un ou plusieurs groupes électrogènes ($30_1$, $30_k$) dont l'écart entre la puissance totale à produire et la puissance réellement produite est déterminée par des signaux de mesure qui mesurent l'écart entre l'échange de puissance souhaité prédéterminé à travers les lignes d'alimentation et l'échange réel, et par des signaux de mesure mesurant l'écart entre la fréquence réelle de la tension principale et la fréquence voulue, ce dernier écart étant converti en écart de puissance, à l'aide d'une constante de proportionalité avec pour résultat des signaux d'entrée pour le régulateur (31) qui, à sa sortie (ses sorties) fournit des signaux de commande à une ou plusieurs groupes électrogènes ($30_1$, $30_k$), caractérisé en ce que le régulateur (31) comporte ledit amplificateur à facteur d'amplification réglable, la vitesse de variation du signal de commande fourni à chacun desdits groupes électrogènes est comparée dans le processeur avec ladite valeur permissible maximale prédéterminée de vitesse de variation et, en réponse à ladite comparaison, le processeur fournit un signal de commande à l'amplificateur, avec pour résultat que le facteur d'amplification demeure égal à une constante prédéterminée si la vitesse de variation de tous les signaux de commande est inférieure audit maximum prédéterminé, ou fournit à l'amplificateur un signal de commande qui provoque une réduction temporaire du facteur d'amplification si la vitesse de variation de l'un quelconque des signaux de commande dépasse ladite valeur . maximale prédéterminée.

10. Groupe électrogène comportant un système de commande selon la revendication 9.

Fig-1

fig-6

Fig-2

0 129 287

DISTURBANCES ACTING ON TO THE SHIP (WIND, WAVES, ETC.)

DESIRED COURSE

11 COURSE CONTROLLER

16 ADDITION ACCORDING TO INVENTION

12 RUDDER CONTROL MACHINE

RUDDER ANGLE

COURSE INFORMATION

VESSEL 13

14 ROLL ANGLE CONTROLLER

17 ADDITION ACCORDING TO INVENTION

FIN CONTROL MACHINE (S)

FIN ANGLE

15

ROLL ANGLE INFORMATION

## Fig-3

ACTUATOR CONTROL
SIGNAL $u_g$

$\left(\dfrac{du_g}{dt}\right)_{max.}$

## Fig-4

ACTUATOR CONTROL
SIGNAL $u_g$

$u\psi$

$u\varphi$

$\left(\dfrac{du_g}{dt}\right)_{max}$

## Fig-5

$\left|\dfrac{du_g}{dt}\right|$

$t$

a

$P$

$t_1$ $t_2$ $t$

b

3

# fig-6

# fig-7

Fig-8

0 129 287